# EUROPEAN PATENT APPLICATION

(11) **EP 1 143 688 A1**
(43) Date of publication of application: **10.10.2001**
(21) Application number: 00104361.1
(22) Date of filing: 02.03.2000
(51) Int. Cl.: H04M 1/247

(54) **Mobile services on the basis of a smart card**

(71) Applicant: Client Electronics GmbH, 8954 Geroldswill (CH)
(72) Inventor: Armuzzi, Reto, CH 8104 Weiningen (CH); Thommen, Peter, CH-8049 Züruch (CH); Buchs, Alain, CH-8953 Dietikon (CH); Tobler, Stephan, CH-8953 Dietikon (CH)
(74) Representative: Rupp, Christian, Dipl.Phys.

(57) **Abstract**

Mobile services are executed on a mobile device (8) having a microprocessor smart card (2). Downloaded mobile service program codes (4) are respectively executed by means of a resident interpreter platform (JAVA applet) (3) for performing a mobile service.

## Description

The present invention relates to a method for performing mobile services on a mobile device having a microprocessor smart card, to a software program for executing such a method, to a microprocessor smart card for a mobile device as well as to a mobile telephone having such a smart card.

The communication's habits of people have strongly changed over the years and indeed show that in addition to voice communication data exchange (e-mail, SMS) has strongly increased. World-wide networking and the integration of business processes in this network infrastructure now mean that the availability of electronic data has become of vital importance.

As the growth in mobile communications has shown, the need for location-independent information exchange is very high. Although technical possible, the present-day offering can only fully satisfy requirements in the area of speech communications. The desire for mobile data exchange continues to grow.

In the last time so-called smart cards found general interest. The term "smart card" is generally used to designate a card of given dimensions including a semiconductor enabling it to store and/or to process information. Two types of smart cards can be distinguished: memory cards and microprocessor smart cards.

Memory cards are unable to process information, they are simply storage devices, and in this respect are very similar to magnetic stripe cards. They have greater memory capacity but the same weakness regarding security. Memory cards are intended for basic application such as debiting telephone units.

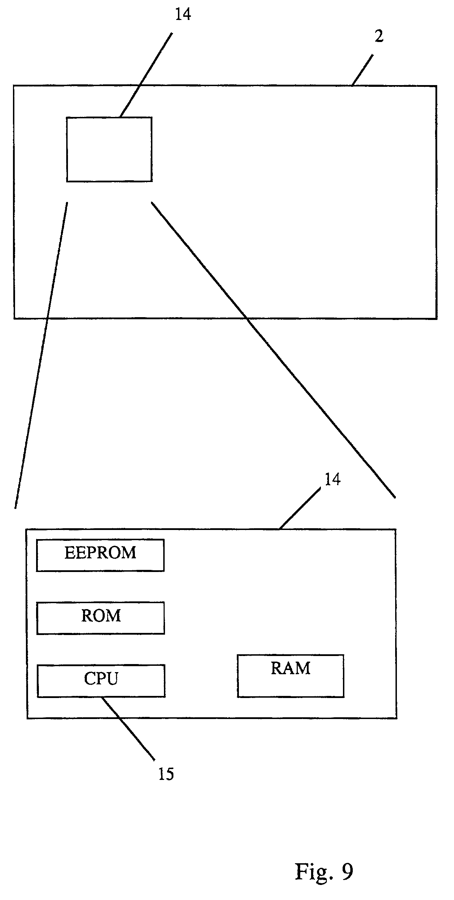

The present invention only relates to the use of microprocessor smart cards having high memory capacity in the microprocessor, enabling them not only to store information but also to carry out local processing on the data and perform complex algorithmic calculations. Such a smart card 2 with its chip 14 comprising a microprocessor 15 is shown in figure 9. Well-known applications for microprocessor smart card consist in encrypting the information exchange by the card and implementing advanced security mechanisms to counter fraud attempts. Microprocessor smart cards therefore can be considered as a small computing device based on a plastic plate capable of supporting applications with advanced service and high guarantee of security with respect to users. The components of smart cards are a chip (simple memory or microprocessor component) and memories like ROM, EEPROM and RAM.

It is already known to use such microprocessor smart cards for mobile services, which are often also called over the air valued-added services. These systems work by transferring executable SMS commands over wireless networks to SIM cards. A SIM card is a smart card used in the GSM system. Theses systems are independent of the receiving mobile equipment. These solutions are offered by different companies. A server delivers SIM commands to a SMS centre. The SMS centre sends these SMS commands over the air (wireless network) to a mobile device such as a mobile telephone. Due to the transmission by means of SMS messages, the over the air capacity is limited.

In view of the above problem the present invention has as an object to improve the execution of mobile services on mobile devices having smart cards.

This object is achieved by means of the features of the independent claims. The dependent claims develop further the central idea of the present invention.

According to a first aspect of the present invention a method for performing mobile services on a mobile device having a so-called smart card of the microprocessor type ("microprocessor smart card") is proposed. On the smart card downloaded mobile service program codes are respectively executed by means of a ( resident) interpreter platform for performing a mobile service.

Mobile service data needed for performing the mobile services are transmitted to the mobile device and stored on the microprocessor smart card. The interpreter platform accesses the mobile service data for performing the corresponding mobile service.

The mobile service data can for example be stored in elementary files (EF) of the GSM file system or in an allocated memory used by the interpreter platform.

The interpreter platform can be divided in an interpreter part for processing mobile service program codes and a receiving part for transmitting data to and/or from a remote server.

The interpreter platform can be particularly implemented by means of a JAVA applet.

The mobile service program code can be stored in an elementary file of the GSM file system or in an allocated memory used by the interpreter platform.

The transmission of mobile service program codes and/or mobile service data can be performed over a non-voice channel.

The mobile service program codes can be downloaded by means of the SMS service of a GSM transmission system.

The mobile service program code necessary for a mobile service can be assembled in a server and then be transmitted to the mobile service by means of a SMS service using a SMS centre. Alternatively single modules of the mobile service program code can be downloaded.

The interpreter platform can consist of methods, wherein each method is associated with a dedicated memory unit for storing the mobile service program code to be executed by said method.

The transmission of mobile service program codes and/or mobile service data can be performed by means of data packets having a header and a data region.

According to another aspect of the present invention a software program for executing a method as set forth above is proposed.

According to a still further aspect of the present invention a smart card for a mobile device such as a mobile telephone having stored thereon an interpreter platform for executing a method as set forth above is proposed.

Finally, according to a still further aspect of the present invention, a mobile telephone having such a microprocessor smart card is proposed.

Further features, advantages and characteristics of the present invention will become evident for the man skilled in the art when reading the following detailed description of an embodiment of the present invention taken in conjunction with the figures of the enclosed drawings.
Figure 1 shows the downloading of mobile service programs,
Figure 2 shows a smart card having an interpreter platform and mobile service part,
Figure 3 shows the transmission of data packets by means of a SMS system from a server to a mobile telephone and back,

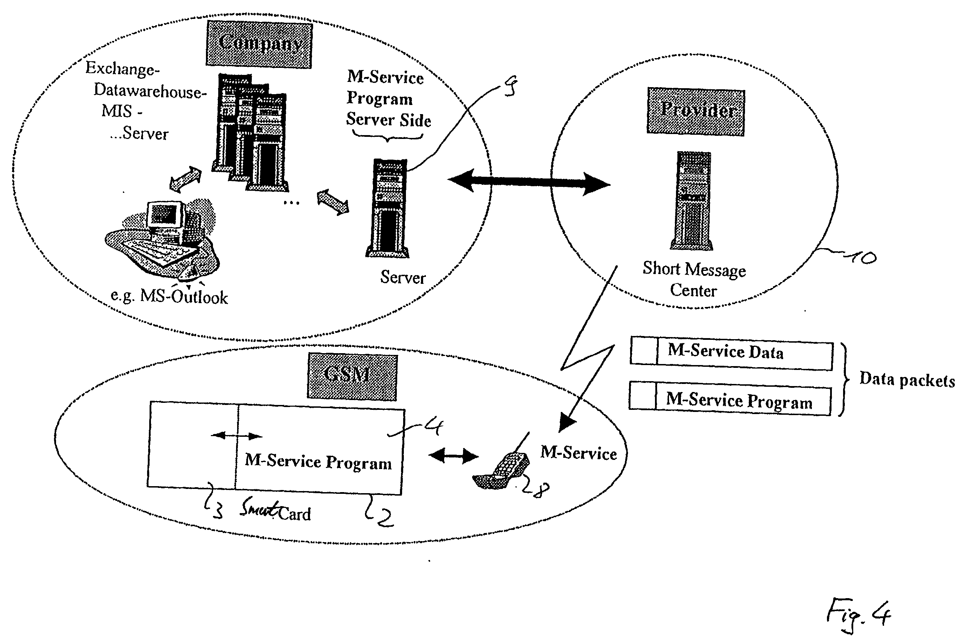

Figure 4 shows the principle elements of a mobile service system according to the present invention,
Figure 5 shows the internal structure of a microprocessor smart card according to the present invention,
Figure 6 shows advantageous applications of the present invention,
Figure 7 shows the application of the present invention for the case of a mobile agenda,
Figure 8 shows a flow chart demonstrating the method according to the present invention, and
Figure 9 shows a known microprocessor smart card.

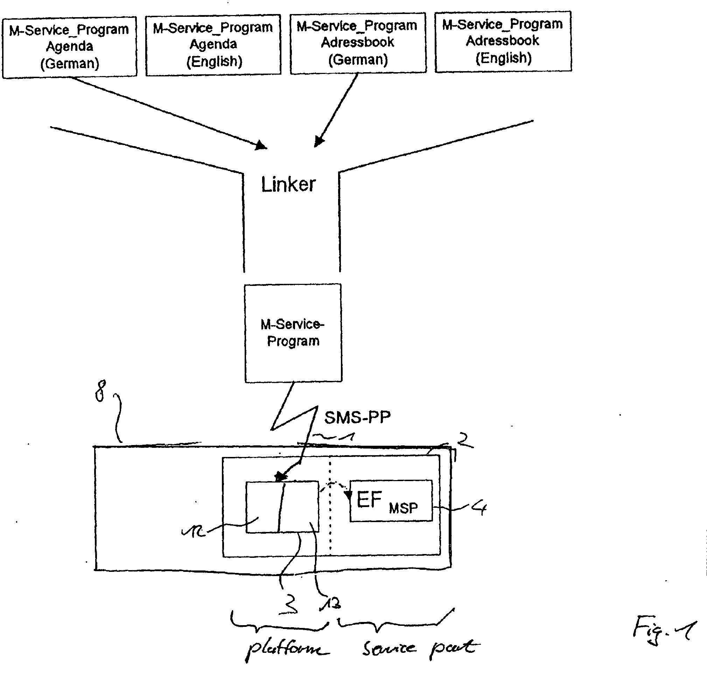

The present invention proposes an application architecture of a microprocessor smart card which is flexible and open for the integration of new mobile services. This is only feasible taking into account the size of the mobile service program. Downloading of these mobile services programs can be effected via a SMS interface 1 as it is shown in figure 1, wherein a maximum of 160 characters (140 bytes) can be transferred with one SMS message. In case of SMS-PP the overhead (headers etc.) reduces the effective number even further, f.e. to 118 characters. Due to that fact the mobile service program has to be kept a few hundred bytes in size. In this case it can be downloaded easily with only a few SMS messages.

As shown in figure 1 different mobile service programs are linked (assembled) in a server (shown later on) and then transmitted as SMS-PP (point to point) messages 1 to a mobile device 8 such as a mobile telephone. Alternatively single modules of the program code are downloaded. The mobile telephone 8 comprises a microprocessor smart card 2 (f.e. a SIM card in the case of the GSM system) which has an interpreter platform 3 with a receiving part 12 and an interpreter part 13 as well as a service part.

The mobile phone user can indicate to his office PC which mobile services he wants to have made available on his mobile phone 8. The needed mobile services program is then assembled on a local server for the user and transferred to him via SMS. If the user language changes, then a new mobile service program in the selected foreign language will be transferred. The operating logic remains the same for the mobile services and only the text for the main use and displays changes.

As soon as the mobile service program which is needed to run a certain mobile service is downloaded on the smart card 2 of the mobile phone 8, mobile service data are transferred between the server 9 and the smart card 2 of the mobile phone 8. The mobile service data contain the information which is sent to and downloaded from the server 9. It may contain commands sent to the server 9 and ordered read agenda information (for example) in case the mobile service "agenda" is loaded and the information which is sent to the mobile phone.

In the following the mobile service program code will be explained. To keep the mobile service program code very compact a new command syntax/language has been developed. This is called mobile service program (MSP). The commands have a very high functionality (optimally conceived for compatibility) and are defined through a byte-code. The commands are picked out from the smart card and interpreted by the JAVA applet. An intermediate buffer (INBUF) is defined such that the commands can exchange data. Thus feedback values are stored in this intermediate memory by input commands and can be used further trough additional commands (e.g. SMS-PP). The commands start to the command-byte, followed by several parameters.

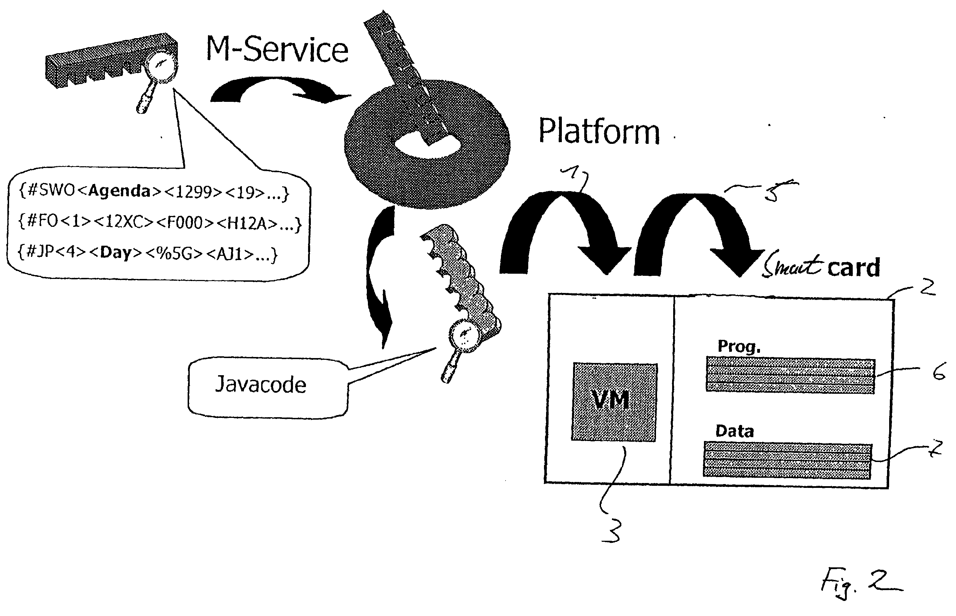

Figure 2 shows in detail the transmission of mobile service program codes and/or mobile service data as commands (for example a JAVA code, an assembler like code, ...) to the microprocessor smart card 2 in the mobile phone 8.

In order to operate a mobile service, the user first selects the interpreter platform applet 3 in the mobile phone 8 and can then select the service in the menu that appears. The mobile phone user himself as well as others, e.g. the secretary in the office, can make a change in the agenda and then make this known generally to the other synchronised agenda users. This can be done via the mobile service data. Should the mobile phone 8 wish to download another service component, provided previously, then he can do this via the menu point "new mobile service". The mobile service program code which is needed in order to run the mobile service remains stored in the smart card of the mobile phone 8 until it is intentionally deleted. Switching on or off the mobile phone 8 does not erase the mobile service program.

Alternatively an automatic update function can be provided which is triggered on the side of the server and not of the mobile phone. In this case data and/or programs are updated as soon as the mobile phone is switched on.

In order to satisfy the above requirements, the smart card comprises two independent parts:
- a platform component and
- a service part (mobile services program). The platform component 3 in figure 2 interprets the mobile service programs stored in elementary files 6 of a GSM file structure or in an allocated memory used by the interpreter platform and executes the commands (when accessed by the CPU of the smartcard). This platform 3 is independent of language and is separate from the actual logical operation of the mobile services. The interpreter platform can f.e. be stored in the EEPROM of the smart card 2. The separation of server's relevant functions allows to develop a compact applet which can provide a basis in the mobile telephone 8 for all services available today and in future.

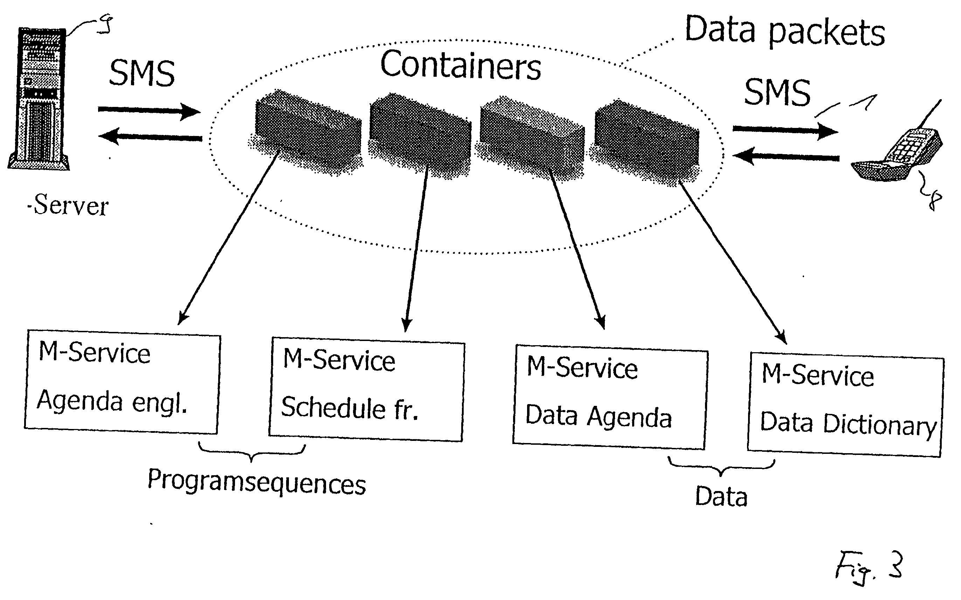

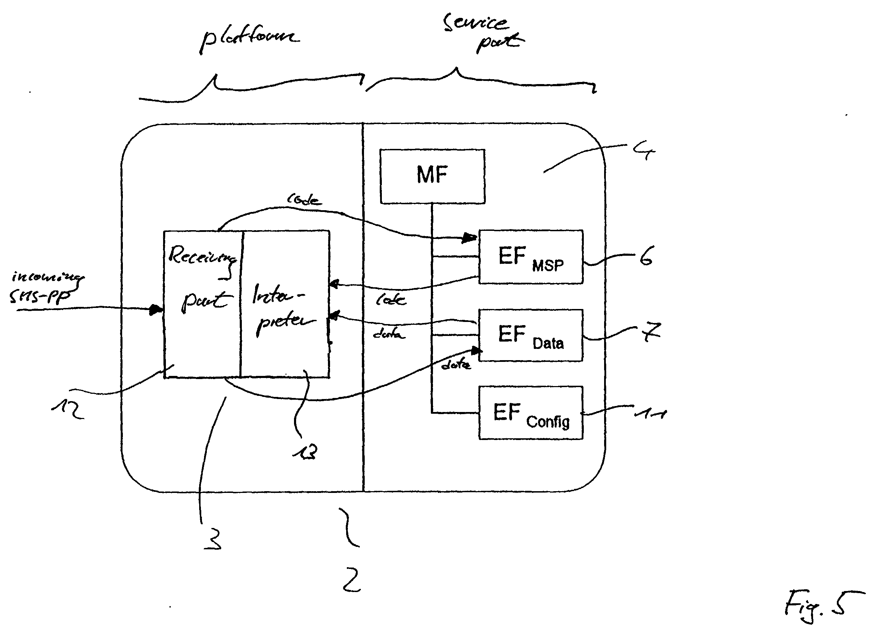

The service part (see figure 1 and figure 5) is provided as mobile service program sequences (see figure 3) via an server 9.

Note that an applet is a unit of selection, context, functionality and security in a JAVA card, i.e. a smartcard using the JAVA (trademark) programming language.

The service part can f.e. be stored in the EEPROM of the smart card 2. In the program sequences a foreign language independent part, the service description (functionality, logical operation) and a small part of the associated data is comprised. If additional mobile service data is supplied to be updated to a given mobile service (e.g. schedule data), this is effected again via the SMS interface.

The separation of the functionality operation and the very compactly designed program code means that the mobile service program code is only a few hundred bytes large.

Therefore, a maximum of functionality can be offered with a minimum of memory requirements.

The mobile service program code is very compact (assembler type). The individual commands are optimally conceived for the compatibility. Thus feedback values can be stored in an intermediate memory by input commands and can be used further through additional commands (e.g. SMS-PP). As it is shown in figure 5 the mobile service program code is stored in its own EF (elementary file) 6 in the GSM file system 4. Commands are divided into groups such as: GUI, data handling, SMS-PP send/receive and operational control (jump, if-then-else, ...). Referring now to figure 3 it will be explained how the mobile service data and the mobile service program codes are transmitted as data packets. A data packet consists of a header and a data region. The header contain 10 bytes. The value stored in the header indicate to the interpreter platform 3 how the data container should be handled. Among other information, the header contains the number of associated and sent packets as well as the corresponding packet numbers. A further value defines what should be done with the received packet (e.g. embedded mobile service code execute, display data, store packets, etc.).

As shown in figure 5, the data packets are stored in the EF_{data} 7 in the GSM file system 4. The stored data contains the current data and the header such as erased, used to updateable. The interpreter platform applet 3 requires this information for its "memory management". Thus it can be shown which data may be overwritten or not

A packet contains so-called data containers in the data region. How much and how large the individual containers are is not specified. The number and the size of the data containers is determined and stored in the header. There are data containers which carry for example telephone numbers separated by the dividing symbol ";". Thus the mobile phone user can use a display of these points to contact directly the corresponding person via the number.

As shown particularly in figure 5, the interpreter platform applet 3 is divided into two functionally separated regions, i.e. a receiving part and a interpreter part 13. The actual interpreter part 13 loads the mobile service code out of the EF_{MSP} 6 and processes it (interpretation and execution). If a command requires data to be processed, then this will be loaded out of the EF_{data} 7. If there is no data in the memory for the actual mobile service application, these data will be obtained via the SMS-PP from the host (or server).

The SMS-PP reception part (receiving part) 3 evaluates incoming SMS-PP. Received data packets are automatically stored in the EF_{data} 7. If the data packets received contain so-called "embedded mobile service program codes", then this is immediately executed. This allows the separate and single execution of codes. The application data is not evaluated by the interpreter 13 but only held in the data containers. This can be stored, displayed or transmitted by SMS-PP.

By means of simple data administration and efficient commands, it is possible to produce mobile telephone applications which are SMS based with very little mobile service program code. The application "agenda" should show this as an example.

The agenda allows the user to show the schedule of the current day or requesting new schedules as required through a menu. In addition the user should also be able to view all the schedules of the current month. When schedules are changed, the data is automatically provided to him from the office. Finally, the agenda should be able receive the schedule input. The memory requirement for the agenda application according to the present invention needs only about 150 bytes.

The mobile service program code for the command to display the menu looks as follows:

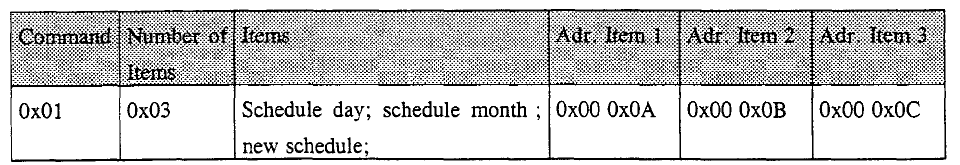

This command displays a menu with three items on the mobile phone. An address is allocated to each item to which the code part for the correspond function is attached. If item 2 is selected, the program operation is executed from address 0x00 0x0B.

The method "show data" has a central role in the interpreter platform (JAVA applet) 3. The show data command is very powerful and can be accessed in various modes. Thus highly flexible program solutions are possible. According to the application, the detailed view of an individual point is possible or other functions such as the direct dial of a telephone number or the selection of an entry. The command "show data" actually consists of some loops, branches and the GSM "select item" and "display tags" commands. This method only uses data for display which is stored in the corresponding EF under the above-mentioned application number. The mobile service program code is guaranteed to remain compact through the comprehensive options integrated in the "show data" command.

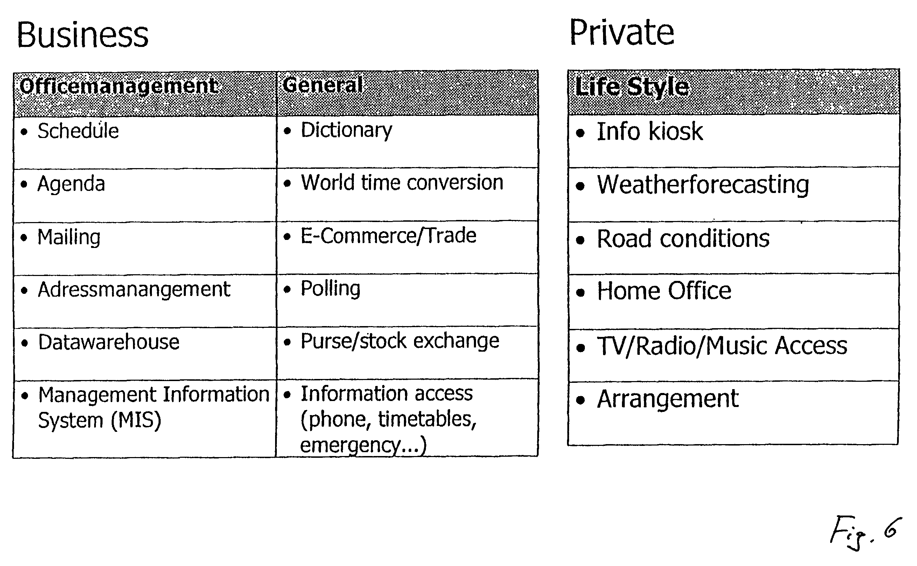

Figure 6 shows different applications for the present invention.

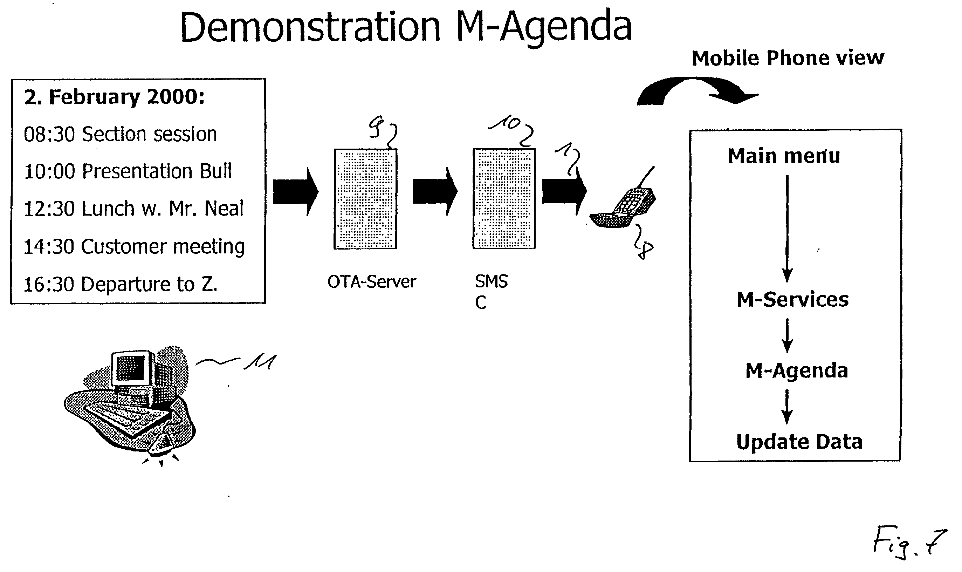

In figure 7 it is again shown how agenda data from a PC 11 can be transferred to the mobile telephone 8. As already explained, the agenda data are transferred to a server 9 converting the data into SMS-PP messages to be transmitted to a SMS centre 10. The SMS centre 10 transmits wirelessly the SMS-PP messages by means of the SMS service 1 to the mobile telephone 8.

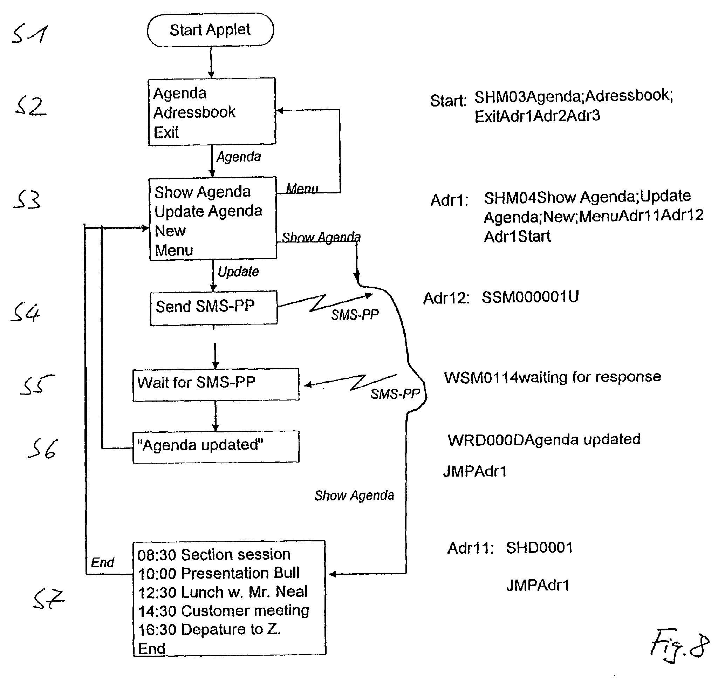

The process for the menu item "agenda" is once again shown with reference to figure 8. The mobile service is started in step S1. In step S2 the user selects the menu point agenda. In step S3 the user selects the menu point update and a corresponding SMS-PP is sent to the server 9. In step S5 the interpreter platform waits for the SMS-PP from the server 9. In step S6 the corresponding message "agenda updated" is received and the process goes back to step S3. In case in step S3 the item "show agenda" is selected, the agenda is shown in step S7 and the processes ends.

When particularly compared to the so-called WAP technology, the WAP technology has the disadvantage that it requires a voice channel, a WAP-capable mobile telephone as well as an internet site which is especially dedicated for WAP application. The present invention is based for example on SMS and therefore does not need a dedicated voice channel. As only a very small data quantity needs to be transmitted, the costs for the user are significantly cheaper.

The following 18 commands are defined (see Annex 1).

### Java Applet

The interpreter applet is divided into two functionally separated regions. The actual interpreter part and the SMS receiving part. The interpreter part loads the mobile service program (MSP) code and interprets the commands. The SMS receiving module process the received SMS-PP data. According to the Data Packet Header the data will be stored or further processed. Moreover, the interpreter applet controls the function for the memory management and the security part. Special configuration settings of the JAVA applet will be stored in the Config-Memory. The applet manages the followed memories:
M-Service program memory (512- n Bytes, SIM-Card dependent)
InBuffer (120 Bytes)
Embedded M-Service program memory (ca. 120 Bytes)
Jump-table (ca. 40 Bytes)
SMS-PP memory (memory of incoming data; 'receiving memory')
Configuration memory

### Mobile Service Server Software

The mobile service server software is divided into three function sections:
The management of the mobile service program code which are sent to the mobile phone and the processing of the incoming and outgoing SMS-PP data packets. The third module is responsible for accessing user data out of other systems like Lotus Notes, Exchange Server, database management systems, etc.

The user can with the client software on his workstation configure the mobile service and adjust to his needs. The client software is available as own application, as HTML-Intranet/Internet-Site and as WML (WAP), too. Therefore, it can also be configured via mobile phone.

### ANNEX 1

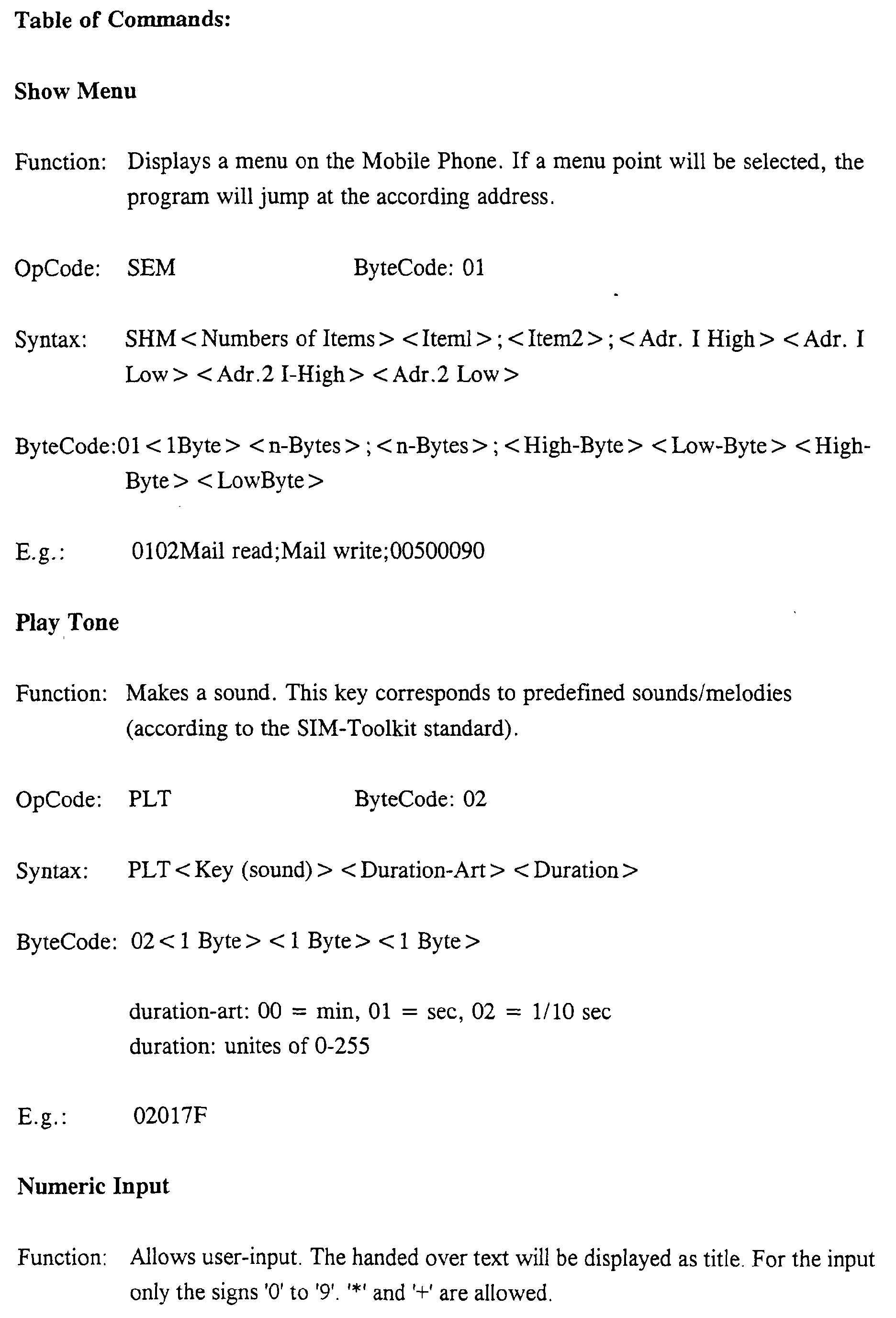

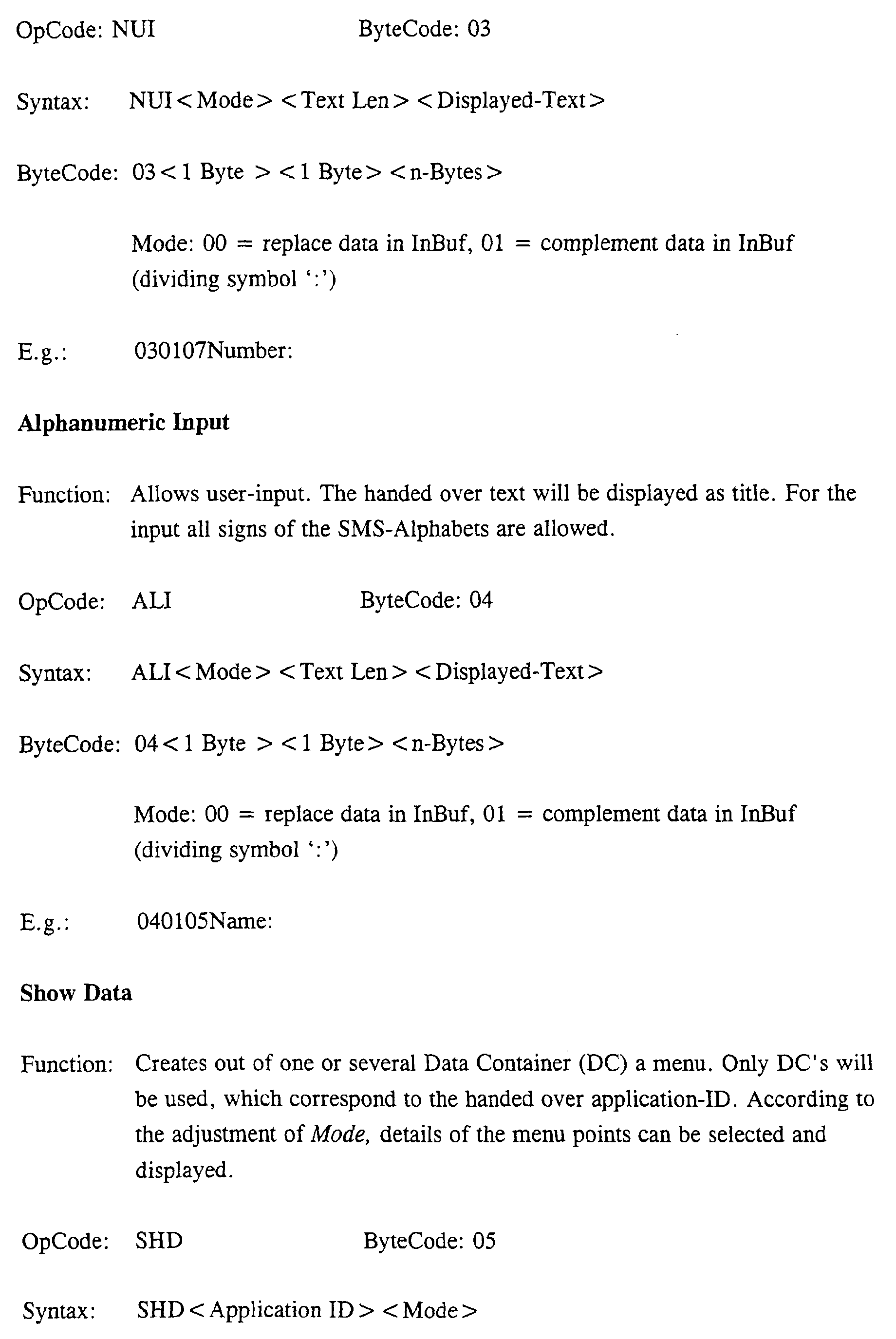

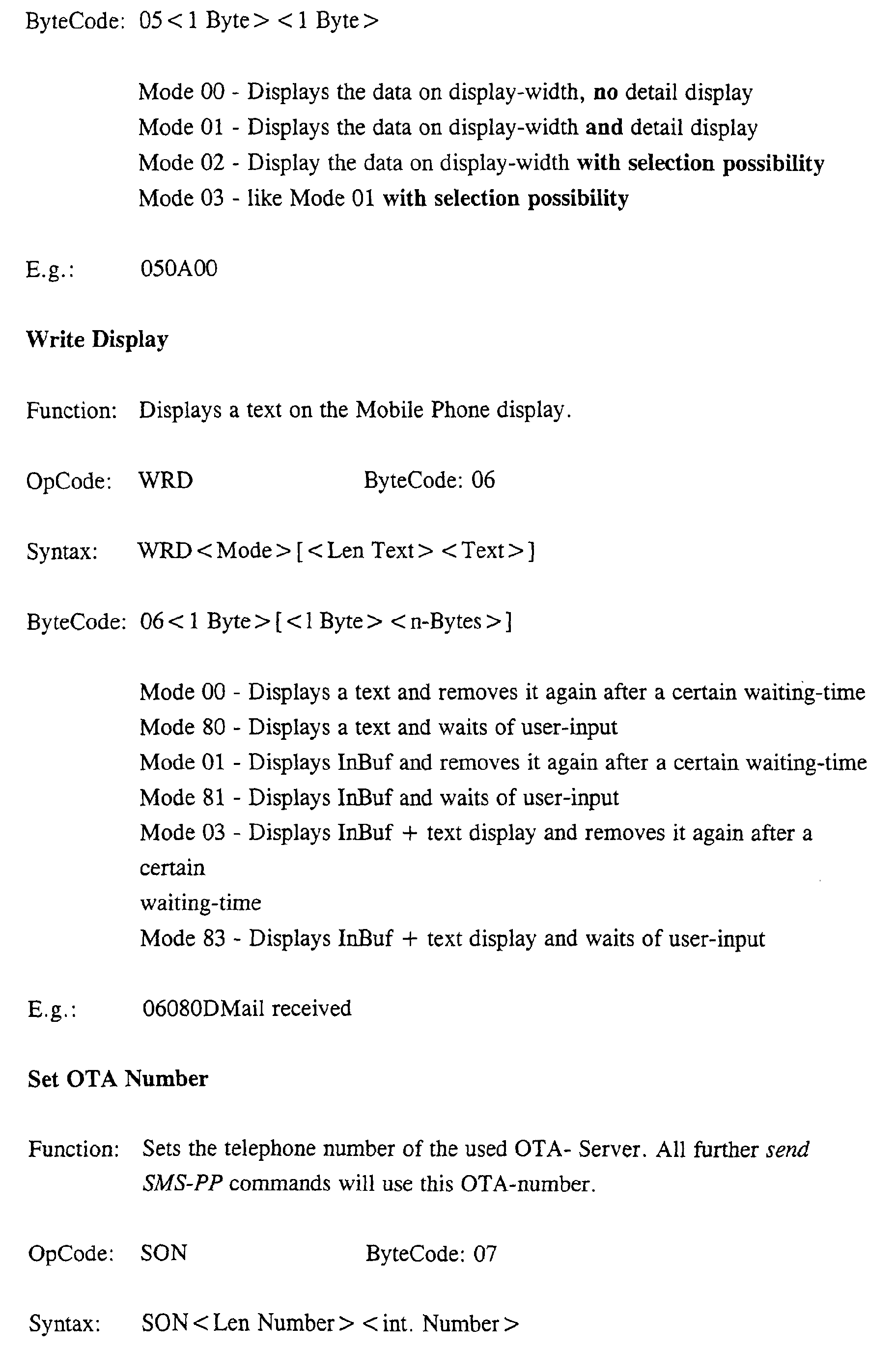

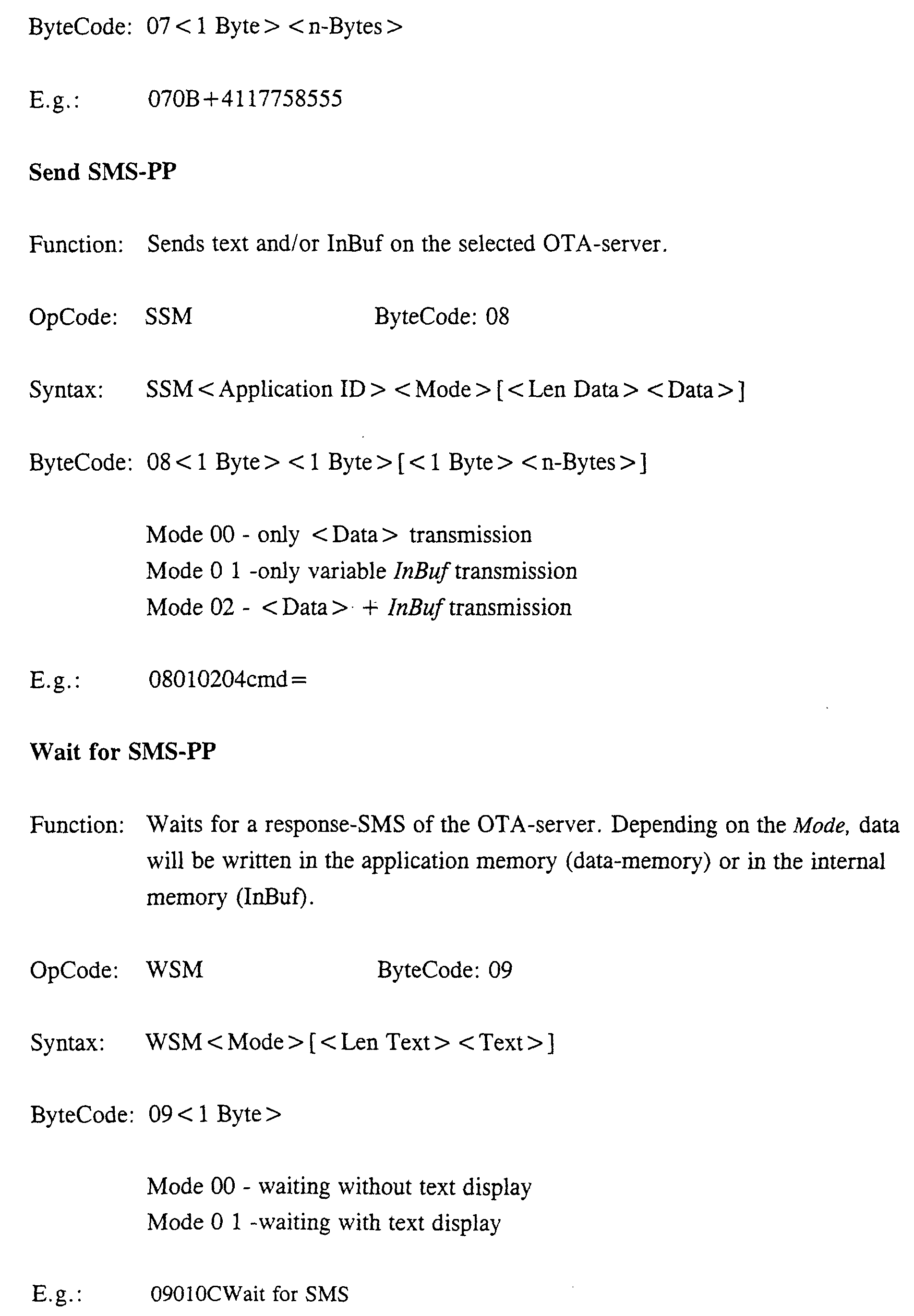

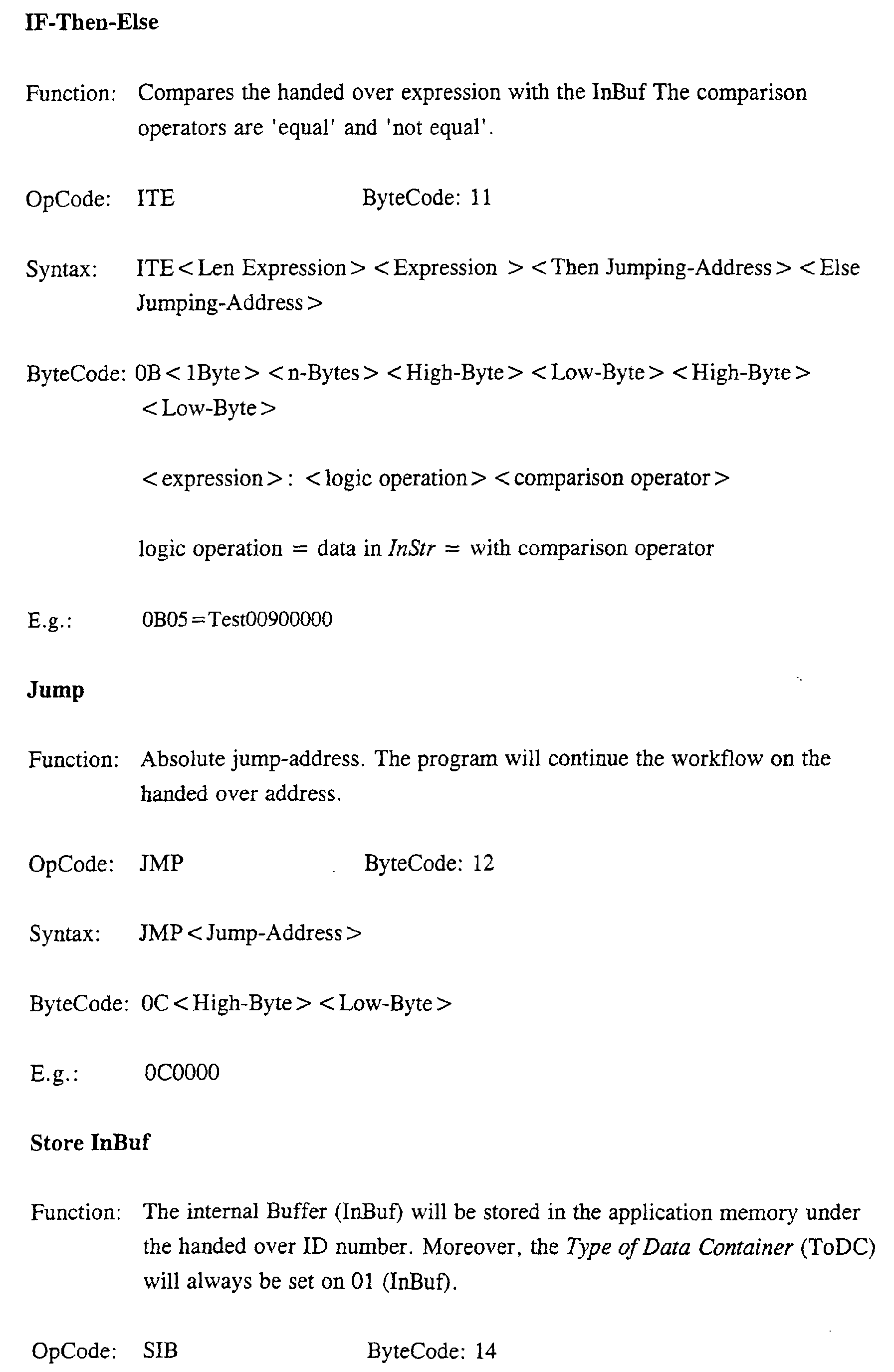

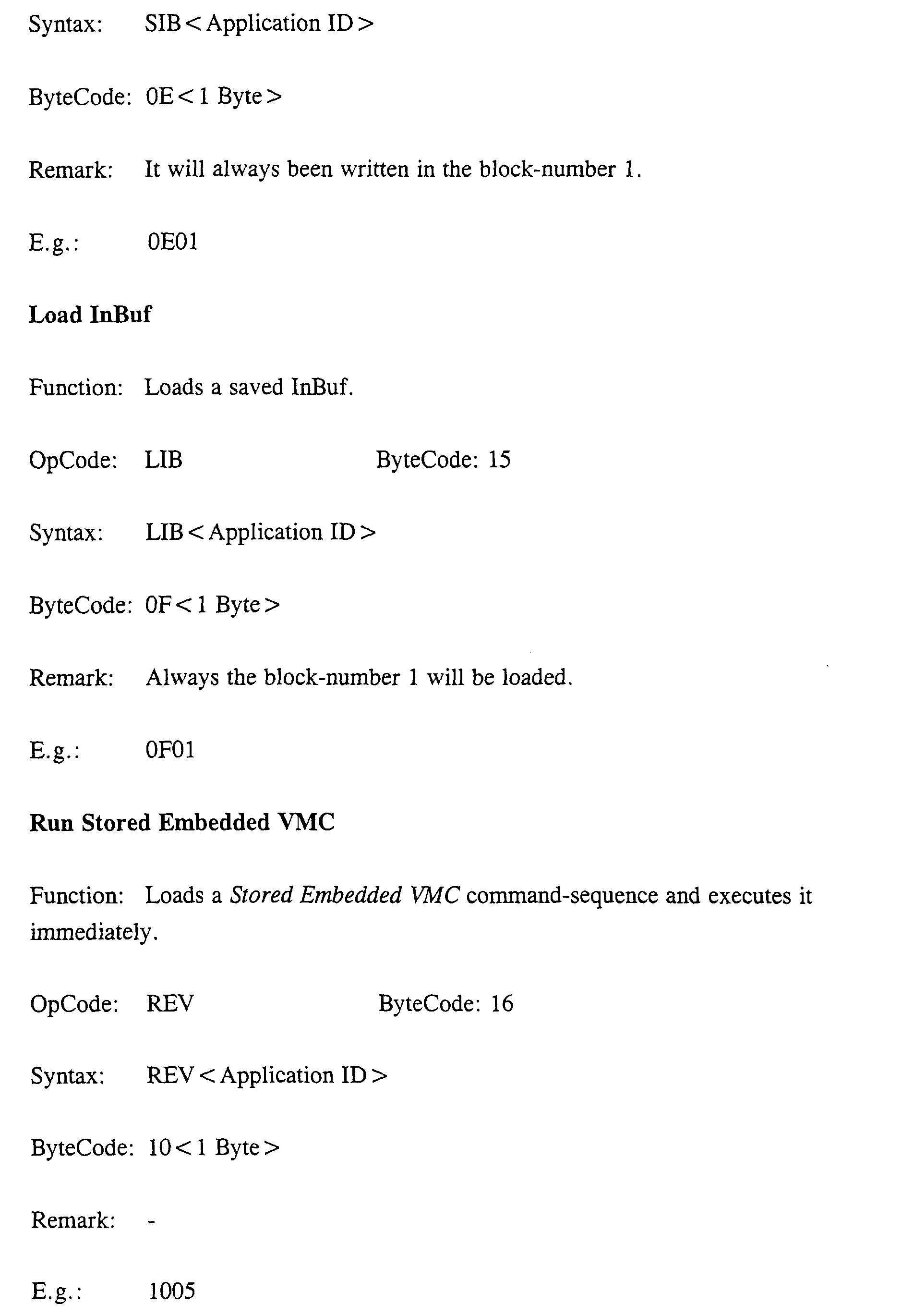

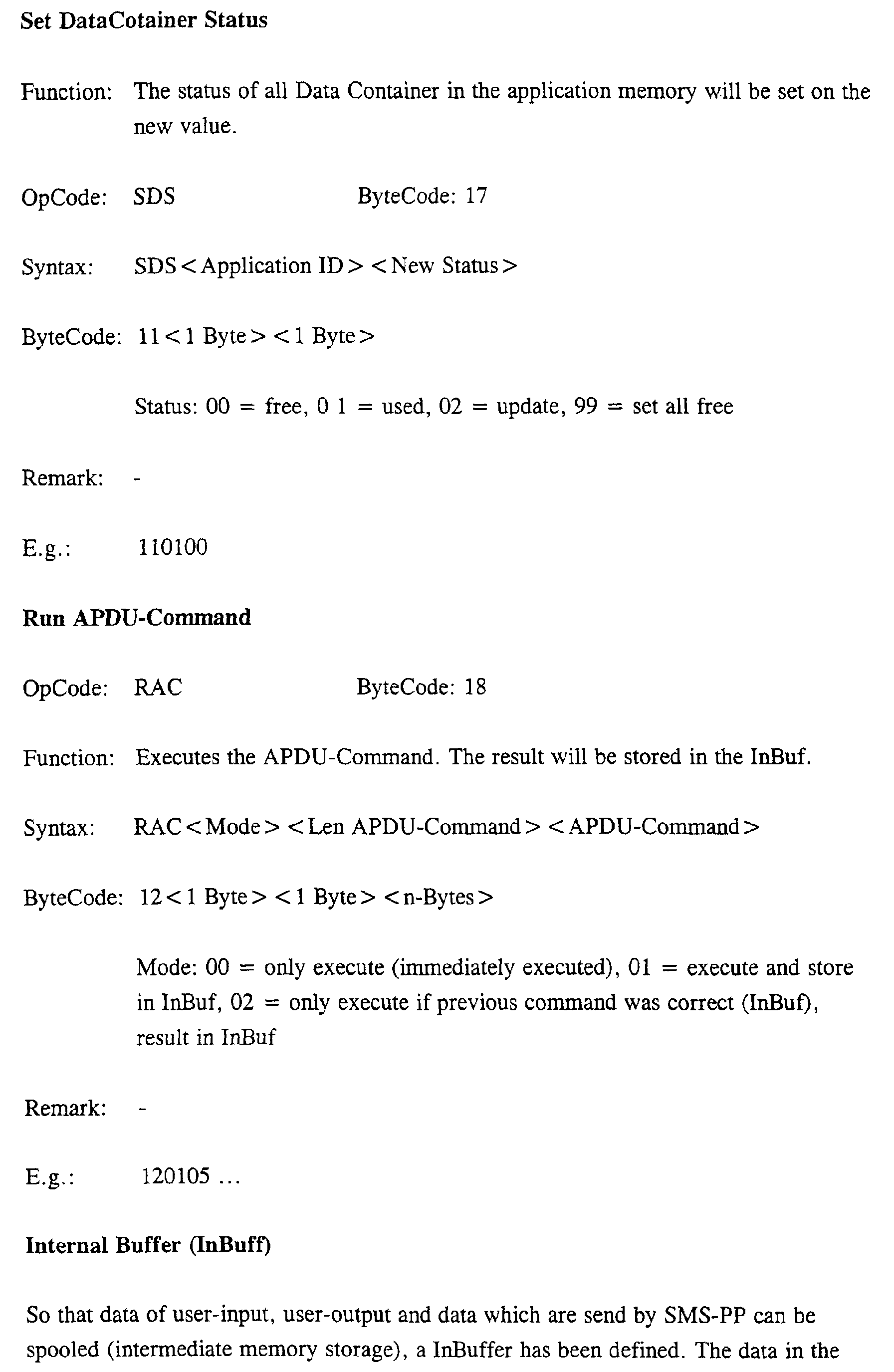

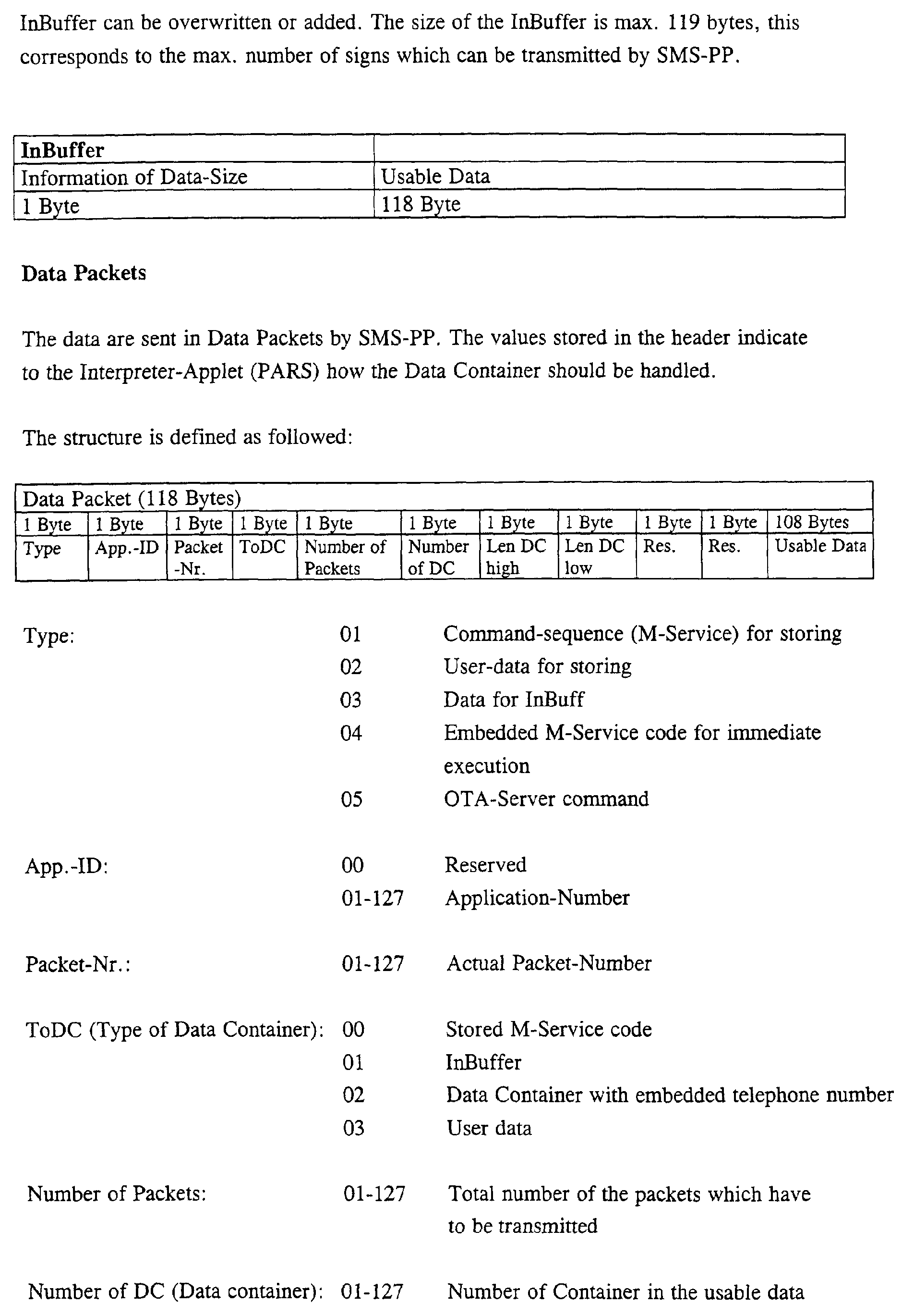

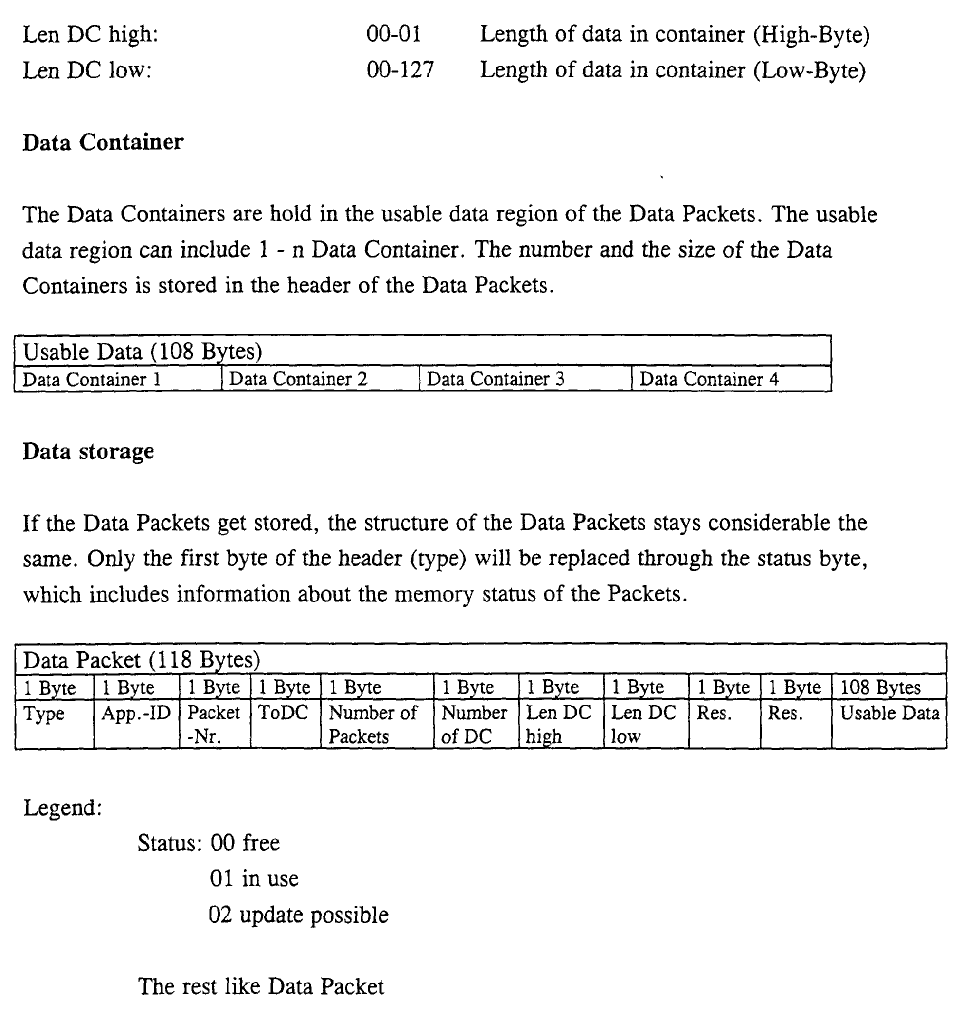

## Claims

1. Method for performing mobile services on a mobile device (8) having a
microprocessor smart card (2),
**characterized in that**
downloaded mobile service program codes (4) are respectively executed by means of an
interpreter platform (3) for performing a mobile service.

2. Method according to claim 1,
**characterized in that**
mobile service data needed for performing the mobile services are transmitted (1) to the
mobile device (8) and stored on the microprocessor smart card (2), wherein the
interpreter platform (3) accesses the mobile service data for performing the
corresponding mobile service.

3. Method according to claim 2,
**characterized in that**
the mobile service data are stored in the microprocessor smart card (2).

4. Method according to anyone of the preceding claims,
**characterized in that**
the interpreter platform (3) is divided in an interpreter part (13) for processing mobile
service program codes and a receiving part (12) for transmitting data to and/or from a
remote server (9).

5. Method according to anyone of the preceding claims,
**characterized in that**
the transmission of mobile service program codes and/or mobile service data is
performed over a non-voice channel (1).

6. Method according to anyone of the preceding claims,
**characterized in that**
the mobile service program codes are downloaded by means of the SMS service (1) of a
GSM transmission system.

7. Method according to claim 6,
**characterized in that**
the mobile service program code necessary for a mobile service is assembled in a server
(9) and then transmitted to the mobile device (8) by means of a SMS service (1).

8. Method according to anyone of the preceding claims,
**characterized in that**
single modules of the mobile service program code can be downloaded.

9. Method according to anyone of the preceding claims,
**characterized in that**
the interpreter platform (3) consists of methods, wherein each method is associated with
a dedicated memory file (6) for storing the mobile service platform code to be executed
by said method.

10. Method according to anyone of the preceding claims,
**characterized in that**
the transmission of mobile service program codes and/or mobile service data is
performed by means of data packets having a header and a data region.

11. Software program for executing a method according to anyone of the preceding claims when implemented on a microprocessor smart card (2) of a mobile device (8).

12. Microprocessor smart card for a mobile device having stored thereon an interpreter
platform for executing a method according to anyone of claims 1 to 11.

13. Mobile telephone having a microprocessor smart card according to claim 12.

## Amended claims

### Amended claims in accordance with Rule 86(2) EPC.

**1.** Method for performing mobile services on a mobile device (8) having a microprocessor smart card (2),
**characterized by** the steps of:
- downloading a mobile service program code (4),
- downloading mobile service data,
- storing the downloaded mobile service program code (4) and the mobile service data on the microprocessor smart card (2),
- executing the downloaded mobile service program code (4) by means of an interpreter platform (3) for performing a mobile service,
wherein the downloading of mobile service program codes and mobile service data is performed over a non-voice channel (1) of an air interface.

**2.** Method according to claim 1,
**characterized in that**
the mobile service program code is downloaded in single modules.

**3.** Method according to claim 1 or 2,
**characterized in that**
mobile service data needed for performing the mobile services are transmitted (1) to the mobile device (8) and stored on the microprocessor smart card (2), wherein the interpreter platform (3) accesses the mobile service data for performing the corresponding mobile service.

**4.** Method according to anyone of the preceding claims,
**characterized in that**
the interpreter platform (3) is divided in an interpreter part (13) for processing mobile service program codes and a receiving part (12) for transmitting data to and/or from a remote server (9).

**5.** Method according to anyone of the preceding claims,
**characterized in that**
the mobile service program codes are downloaded by means of the SMS service (1) of a GSM transmission system.

**6.** Method according to claim 5,
**characterized in that**
the mobile service program code necessary for a mobile service is assembled in a server (9) and then transmitted to the mobile device (8) by means of a SMS service (1).

**7.** Method according to anyone of the preceding claims,
**characterized in that**
the interpreter platform (3) consists of methods, wherein each method is associated with a dedicated memory file (6) for storing the mobile service platform code to be executed by said method.

**8.** Method according to anyone of the preceding claims,
**characterized in that**
the transmission of mobile service program codes and/or mobile service data is performed by means of data packets having a header and a data region.

**9.** Software program for executing a method according to anyone of the preceding claims when implemented on a microprocessor smart card (2) of a mobile device (8).

**10.** Microprocessor smart card for a mobile device having stored thereon an interpreter platform for executing a method according to anyone of claims 1 to 8.

**11.** Mobile telephone having a microprocessor smart card according to claim 10.
